# EUROPEAN PATENT SPECIFICATION

(11) **EP 0 591 920 B1**
(45) Date of publication and mention of the grant of the patent: **17.09.1997**
(21) Application number: 93116070.9
(22) Date of filing: 05.10.1993
(51) Int. Cl.: B01D 53/50, B01D 53/56, B01D 53/60, B01J 19/12

(54) **Method and apparatus for removing NOx and/or SOx**
Verfahren und Vorrichtung zur Abtrennung von NOx und/oder SOx
Procédé et dispositif pour éliminer NOx et/ou SOx

(30) Priority: 06.10.1992 JP 292147/92; 01.12.1992 JP 345504/92
(43) Date of publication of application: 13.04.1994
(73) Proprietor: FUJI ELECTRIC CO., LTD., Kawasaki-shi Kanagawa 210 (JP)
(72) Inventor: Miyoshi, Noriomi, c/o Fuji Electric Co., Ltd., Kawasaki-shi, Kanagawa (JP); Shinkai, Kazuteru, c/o Fuji Electric Co., Ltd., Kawasaki-shi, Kanagawa (JP); Sasamoto, Toshiharu, c/o Fuji Electric Co., Ltd., Kawasaki-shi, Kanagawa (JP); Kawakami, Hitomi, c/o Fuji Electric Co., Ltd., Kawasaki-shi, Kanagawa (JP); Nishikata, Satoshi, aki-ku, Kawasaki-shi (JP)
(74) Representative: Grünecker, Kinkeldey, Stockmair & Schwanhäusser Anwaltssozietät

(56) References cited:
- EP-A- 0 325 133
- EP-A- 0 441 111
- WO-A-91/00241
- DE-A- 3 535 172
- DATABASE WPI Section Ch, Week 8813, Derwent Publications Ltd., London, GB; Class D15, AN 88-089804 & JP-A-63 042 792 (HOSOKAWA MICRON KK) 23 February 1988
- DATABASE WPI Section Ch, Week 9148, Derwent Publications Ltd., London, GB; Class E36, AN 91-349329 & JP-A-3 233 100 (AGENCY OF IND SCI TECH (FJIE ) FUJI ELECTRIC MFG KK) 17 October 1991
- DATABASE WPI Section Ch, Week 8631, Derwent Publications Ltd., London, GB; Class E36, AN 86-200924 & JP-A-61 133 125 (KAGITANI T) 20 June 1986

## Description

The present invention relates to a method and an apparatus for removing NOx and/or SOx of low concentration from the air.

Regarding the harmful gas removal apparatus, various oxidation or reduction catalyzers to treat discharged gas from e.g. motor vehicles or power plants have been developed. Those harmful gas removal apparatus are constructed to be operable for high concentration harmful gas of several hundreds ppm and at high temperature of several hundreds to 1000 °C. In design, the removal of low concentration harmful gas of several ppm from the air is not taken into consideration.

The method of removing a trace of harmful gas from the air has been developed (e.g., JP-A-1-218622). Also a ventilation system for car road tunnels using the harmful gas removal method has been developed (e.g., JP-A-3-233100).

The harmful gas removal method is based on the fact that when a mixture of titanium dioxide (TiO₂) and active carbon or a mixture of the former and iron series metal oxide (e.g. Fe₂O₃, NiO or ZnO) is illuminated with light, NOx and SOx of low concentration can efficiently be removed at room temperature. This method is able to remove low concentration harmful gas of several ppm or less in the air without any additional process, for example, heating process, at low cost.

In this method, it could be considered that titanium dioxide or iron series metal oxide as the photocatalyzer is activated by light applied thereto. The activated photocatalyzer cooperates with the active carbon to convert the harmful gas to another material, for example, NOx to nitric acid ions (NO₃⁻) and SOx to sulfuric acid ions (SO₄²⁻), and catches the converted material. The mixture of the photocatalyzer and active carbon (referred to simply as photocatalyzer hereinafter) is gradually deteriorated in its activity since reactive product is deposited thereon. However, after the reactive product is washed away from the photocatalyzer by water, and the photocatalyzer is dried, the photocatalyzer can be used again.

In the harmful gas removal methods disclosed of the above, the photocatalyzer as grains shaped is fixed on the adhesive-coated surface of a fixed member, and thus, the photocatalyzer is brought into contact with harmful gas in a fixed state.

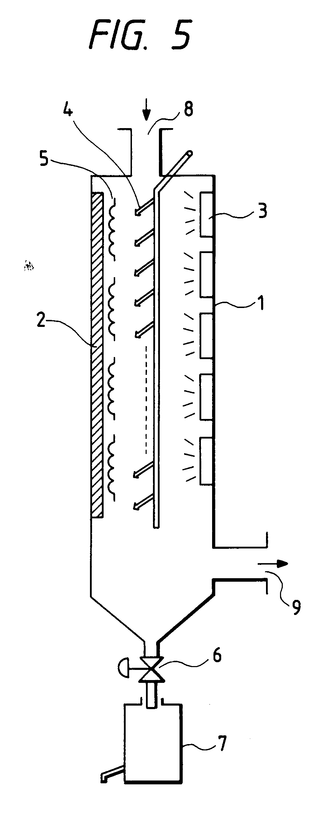

A construction of an apparatus for realizing the harmful gas removal method as just mentioned is illustrated in Fig. 5. As shown, a photocatalyzer layer 2 is layered on one side of the inner wall of an upright reactive chamber 1. Light sources 3 for illuminating the photocatalyzer layer 2 are provided on the other side of the inner wall. A series of nozzles 4 and a heater 5 for drying the photocatalyzer layer 2 are disposed along the photocatalyzer layer 2 within the reactive chamber 1. A washing water tank 7 is placed under the reactive chamber 1, with a valve 6 interconnecting them.

The gas to be subjected to the treatment is fed into the reactive chamber 1 through an inlet 8 formed at the top of the chamber. Within the chamber, the gas comes in contact with the photocatalyzer layer 2 by which the harmful gas is removed from the gaseous body. The gas thus cleaned is discharged from an outlet 9 formed in the lower portion of the chamber. When reactive product is deposited on the photocatalyzer layer 2 and activity of the layer deteriorates to a certain degree, the feeding of the gas is stopped. The photocatalyzer layer 2 is washed by water spouted out of the nozzles 4, and then dried by the heater 5. The water dropping from the photocatalyzer layer is collected into the tank 7 through the valve 6 opened. The thus collected water, if necessary, is processed for harmful contents removal and discharged as waste water.

The harmful gas removal apparatus thus constructed has the following problems.
(1) The regaining process of the deteriorated photocatalyzer layer by the washing and drying must be performed within the reactive chamber since the photocatalyzer layer is fixed in the chamber. When the washing device (nozzles 4 in the above example) and the drying device (heater 5) are installed within the reactive chamber, these devices must be laid out so as not to interrupt the air flow and the passage of light from the light sources 3. Thus arrangement results in the complexity of the apparatus.
(2) The fixed side of the photocatalyzer layer in contact with the inner wall of the chamber does not subject to reaction with the harmful gas. And it is very difficult to uniformly illuminate the wall of the chamber on which the photocatalyzer layer is fastened with light from the light sources. Accordingly, the reaction inefficiently progresses.
(3) To increase the contact area of the photocatalyzer, the surface area of the fixed member must be increased. The result is apt to increase the size of the harmful gas removal apparatus. It is difficult to increase the contact area of the photocatalyzer under reduction of the apparatus size.
(4) The reaction process must be stopped during the photocatalyzer regaining process.
(5) Removal of the deteriorated photocatalyzer and placement of the fresh photocatalyzer are not easy.

JP-A-63-042792 discloses the use of porous titanium dioxide lumps formed by a large number of ultrafine titanium dioxide particles and light transmissive material in a method for cleaning liquids.

An object of the present invention is to provide a method and an apparatus for removing NOx and/or SOx from the air which eliminates the above-mentioned problems arising during the process of removing harmful gas removed from a gas using the photocatalyzer.

To achieve the above object, in the present invention, a mixture of photocatalyzer and active carbon as shaped grains are brought into contact with air containing NOx and/or SOx while drifting.

The present invention provides a method of removing NOₓ and/or SOₓ from an air stream, comprising the steps of:
mixing a mixture (10) of photocatalyzer and active carbon with air containing NOₓ and/or SOₓ in a chamber (12), said mixture (10), being in the form of shaped grains, drifting in said air;
reacting said drifting mixture (10) with said air during illumination by lighting means (14) in said chamber (12), said mixture (10) catching NOₓ and/or SOₓ so as to remove said NOₓ and/or SOₓ;
discharging the air separated from said NOₓ and/or SOₓ from an outlet (18) of said chamber (12);
removing part of said illuminated mixture (10) from said drifting mixture (10);
regaining the reactivity of said mixture (10) without interrupting the reacting step; and
returning said mixture (10) into said chamber (12).

Further, the present invention provides an apparatus for removing NOₓ and/or SOₓ from an air stream comprising:
a chamber (12) for mixing a mixture (10) of photocatalyzer and active carbon with air containing NOₓ and/or SOₓ, said mixture being in the form of shaped grains;
drifting means (11, 23, 25) for swirling said mixture in said chamber (12);
lighting means (14) disposed in said chamber (12) for illuminating said drifting mixture (10) to react with said air in said chamber (12);
outlet (18) for discharging the air separated from said mixture (10) from said chamber (12);
regaining means (13) separated from said chamber (12) for regaining the reactivity of said mixture (10); and
circulating means (11, 21, 22, 23, 25) for removing part of said mixture (10) from said chamber (12) and returning said mixture (10) from said regaining means (13) to said chamber (12).

Moreover, the present invention provides an apparatus for removing NOₓ and/or SOₓ from an air stream, comprising:
a chamber (12) for mixing a mixture of photocatalyzer and active carbon with air containing NOₓ and/or SOₓ, wherein said mixture is supported on surfaces of a plurality of globular bodies (41) having a diameter of 20 mm to 50 mm, said globular bodies (41) being floatable in air, and wherein said chamber (12) has at least one layer of net (38) bearing said globular bodies (41) thereon;
drifting means (28) for swirling said mixture in said chamber (12);
lighting means (14) disposed in said chamber (12) for illuminating said drifting mixture to react with said air.

Specific embodiments of the present invention are set forth in the dependent claims.

In one embodiment of the invention, air containing NOx and/or SOx is fed to pass through groups each consisting of a number of globular bodies each fixing a mixture of photocatalyzer and active carbon on the surface thereof, and the globular bodies float by the air fed thereto to bring the harmful gas into contact with the photocatalyzer. The method may be executed by an apparatus constructed such that a number of globular bodies each fixing a mixture of photocatalyzer and active carbon on the surface thereof, and a light source for illuminating the globular bodies with light emitted therefrom are disposed within a reactive chamber allowing air to pass therethrough, and air containing harmful gas is fed to the reactive chamber from the bottom thereof and discharged out of the reactive chamber from the top thereof. In the apparatus, nozzles for spouting forth washing water to the globular bodies may be provided in the upper portion of the reactive chamber.

The photocatalyzer may be titanium dioxide (TiO₂) or a mixture of titanium dioxide and iron series metal oxide, such as ion sesquioxide (Fe₂O₃), copper oxide (Cu₂O), nickel oxide (NiO), and zinc oxide (ZnO). One or more number of iron series metal oxides may be used. The light source capable of emitting light of 400 nm or shorter in wavelength is used.

In the present invention, the photocatalyzer is used not fixed. That is, photocatalyzer grains are brought into contact with air containing NOx and/or SOx while drifting. Alternatively, the globular bodies each fixing photocatalyzer on the surface thereof float by the air fed thereto to bring the NOx and/or SOx into contact with the photocatalyzer. When the activity of the photocatalyzer grains or the photocatalyzer globular bodies is deteriorated, the photocatalyzer is removed and subjected to a regain process. Accordingly, a reaction section where the photocatalyzer reacts with harmful gas and a regaining section where the used photocatalyzer is washed and dried are separately provided in the apparatus for removing NOx and/or SOx. If the apparatus is so constructed, the reaction section is simple in construction because the washing device and the drying device are not installed in the reaction section. In the regaining section, photocatalyzer grains or photocatalyzer globular bodies can be collected in the same place and processed there. Accordingly, the process of regaining the activity of the photocatalyzer and the replacement of the used photocatalyzer with a fresh one can be carried out readily and reliably.

The surface of the photocatalyzer brought into contact with the harmful gas is formed by the combination of the surfaces of the photocatalyzer grains or globular bodies. The contact area of the photocatalyzer used in the invention is larger than that of the photocatalyzer when the photocatalyzer is fastened onto the planar surface of a fixed member. Further, the photocatalyzer grains or globular bodies are drifting. The photocatalyzer caught by the surface comes uniformly in contact with the harmful gas and uniformly illuminated with light from the light source. The reaction efficiently progresses.

Furthermore, with separation of the reaction section and the regaining section, the reaction of the photocatalyzer with the harmful gas can be continued when the deteriorated photocatalyzer is processed for regaining the activity of it.

Fig. 1 is a summarized arrangement of an apparatus for removing NOx and/or SOx according to an example of the present invention.

Fig. 2 is a summarized arrangement of an apparatus for removing NOx and/or SOx according to another example of the present invention.

Fig. 3 is a longitudinal sectional view showing an apparatus for removing NOx and/or SOx according to a further embodiment of the present invention.

Fig. 4 is an arrangement showing a ventilation system using the apparatus for removing NOx and/or SOx when it is installed in a car-road tunnel.

Fig. 5 is a longitudinal sectional view showing a conventional harmful gas removal apparatus.

### Example 1

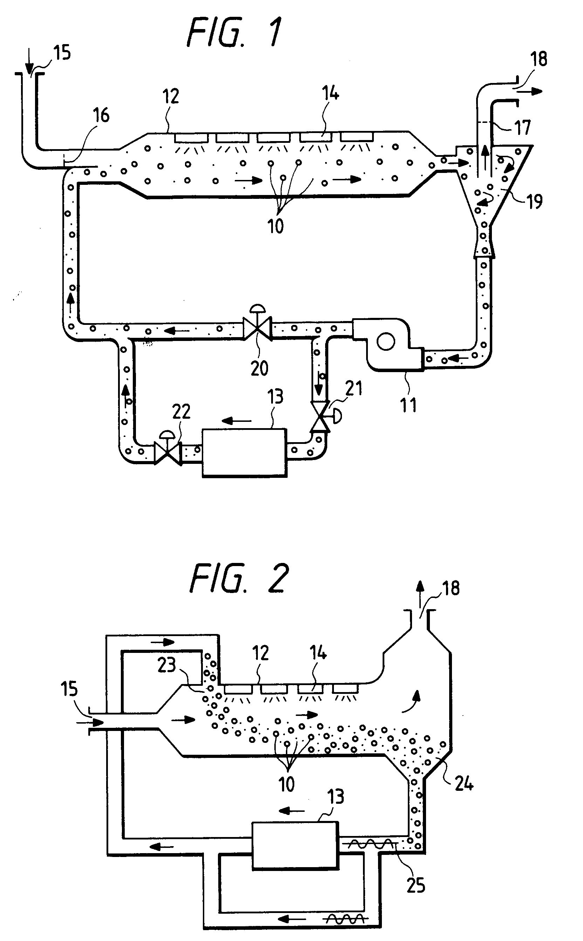

Fig. 1 shows an example of the present invention in which photocatalyzers in the form of grains are brought into contact with NOx and/or SOx in the air while drifting. In the apparatus, photocatalyzer grains 10 consisting of titanium dioxide, a mixture of active carbon and iron series metal oxide (e.g. Fe₂O₃, Cu₂O, NiO or ZnO) are drifting along by a stream of air caused by a blower 11 to circulate through a loop including a tubular reactive chamber 12 and a regaining device 13. A series of light sources 14 illuminating and activating the photocatalyzer grains 10 are disposed within the reactive chamber 12.

The air containing NOx and SOx is fed by a blower (not shown) into the reactive chamber through a filter 16, and passes through the reactive chamber 12, and is discharged through a filter 17, from an outlet 18. When flowing within the reactive chamber 12, the air comes in contact with photocatalyzer grains 10 being afloat within the reactive chamber. NOx and SOx in the air react with the photocatalyzer, which are activated by light from the light sources, to be oxidized into oxidization products, such as nitric acid ions and sulfuric acid ions, further into nitrate or sulfate products to be coupled with iron series metal oxide, so that the reaction product is caught and removed by the surfaces of the photocatalyzer grains 10. The photocatalyzer grains 10 are separated from the discharge air by a cyclone 19 located at the outlet of the reactive chamber 12.

The air path derived from the blower 11 is branched into two paths. In normal stage, an electromagnetic valve 20 is closed, and electromagnetic valves 21 and 22 located before and after the regaining device 13 are opened, so that the reaction process of photocatalyzer grains 10 with the harmful gas is performed while the used photocatalyzer grains 10 are treated for regaining the activity of the photocatalyzer. For the maintenance of the regaining device 13, the electromagnetic valves 21 and 22 are closed. At this time, if the electromagnetic valve 20 is left open, the reaction process can be continued.

Capability of emitting light of 300 to 400 nm in wavelength is required for the light sources 14. A mercury bulb, xenon lamp or black light may used for the light sources 14. The grain diameter of the photocatalyzer grains 10 is preferably within the range of 1 µm to 1 mm, but may be properly selected depending on the rate of flow of the air processed.

The regaining device 13 washes the used photocatalyzer grains 10 to remove the reaction products and dries the cleaned photocatalyzer grains 10. For example, it may be constructed such that after showered with washing water, the photocatalyzer grains 10 are exposed to hot air. In a case where as the result of repeatedly using the photocatalyzer grains 10, the grains are too deformed to be properly afloat, the deformed shape of the grains may be discharged for remaking or refresh photocatalyzer grains and the grains corrected may be supplied anew. The water discharged from the regaining device 13 contains the reaction products, the hydrogen ion concentration pH of the discharged water is adjusted to an allowable level, and then is drained off.

Gas/solid separation device for separating photocatalyzer grains 10 from the air after removal of the harmful gas may be an electric dust collector or bag filter, in addition to the cyclone. In the above-mentioned embodiment, the reactive chamber 12 is of the horizontal style, but may be of the vertical style where the installation space is limited, and easy maintenance is required.

### Example 2

Fig. 2 shows another example of the present invention in which photocatalyzers in the form of grains are brought into contact with NOx and/or SOx in the air while drifting. In this example, with the reactive chamber 12 through which air to be treated passes, photocatalyzer grains 10 freely fall from a falling port 23 and are received and collected at a collecting port 24. The grain diameters of the photocatalyzer grains 10 and a rate of flow of the processed air may be properly selected so that the photocatalyzer grains falling from the falling port 23 ride on a stream of the processed air going from the inlet 15 toward the outlet 18, and reaches the collecting port 24 in a floating condition. During the travel of the photocatalyzer grains 10, NOx and/or SOx contained in the air reacts with the photocatalyzer grains, so that the harmful gas is removed from the processed air.

The photocatalyzer grains 10 collected at the collecting port 24 are conveyed by a conveyor line 25, such as a belt conveyor or a screw conveyor, to the regaining device 13 where its activity is regained. The regained photocatalyzer grains 10 are transported to the falling port 23 to be used again for harmful gas removal. As in the first example, the regaining device 13 is coupled with a by-path line. This example is advantageous in that any special air/solid separating device is not required.

In the constructions of the apparatuses for removing NOx and/or SOx as mentioned above, the reactive chamber 12 as a reaction section where the photocatalyzer grains 10 are brought into contact with the air to be treated is provided separately from the regaining device 13 as a regaining section where the photocatalyzer grains 10 of deteriorated activity are washed by water and dried. The structures of these sections are simplified, so that the size of the resultant apparatus is small. As a result, reliable reaction and regaining processes are ensured. Further, the apparatus can continuously run for the reaction process since the regaining process of the photocatalyzer grains 10 does not disturb the reaction process. Additionally, the surface area of the photocatalyzer grains 10 is large because the photocatalyzer takes the form of grains. The photocatalyzer grains 10 come in contact with the air while drifting within the reactive chamber. Therefore, the reaction efficiency is good.

### Example 3

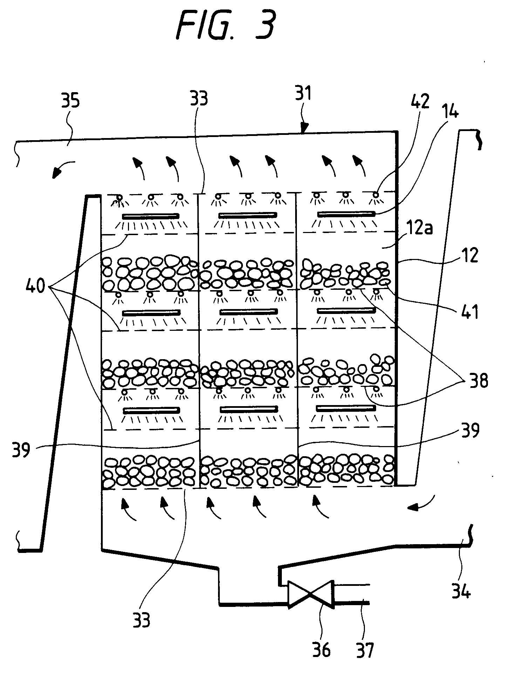

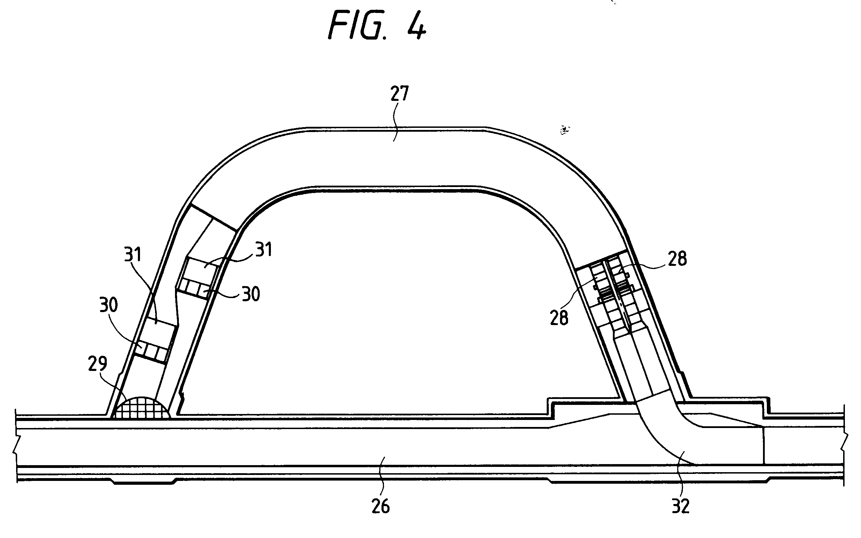

Figs. 3 and 4 cooperate to show an example of the present invention in which a number of globular bodies fixing photocatalyzer on the surfaces thereof are drifting within a reactive chamber, and the photocatalyzer on the surfaces of the drifting globular bodies comes in contact with the NOx and/or SOx. Fig. 3 is a longitudinal sectional view showing an apparatus for removing NOx and/or SOx according to a further embodiment of the present invention. Fig. 4 is an arrangement showing a ventilation system using the apparatus for removing NOx and/or SOx when it is installed in a car-road tunnel.

In Fig. 4, a by-path tunnel 27 is provided across a car-road tunnel 26. Contaminated air within the tunnel 26 is guided into the by-path tunnel 27 through a suction port 29 by means of a blast fan 28. The contaminated air thus guided into the tunnel 27 enters an electric dust collector 30 where particles of soot are removed from the contaminated air. The contaminated air emanating from the electric dust collector 30 then enters an apparatus 31 for removing NOx and/or SOx where the harmful gas is removed from the air. The thus cleaned air is returned to the upper space of the tunnel 26, from a blast duct 32 connecting to the blast fan 28. The space in the by-path tunnel 27, that ranges from the harmful gas removal apparatus 31 and the blast fan 28, is divided into an upper space and a lower space by a partition, not shown. The upper space is used for an air flow path, while the lower space is used for an auxiliary machine room and an electric control room.

In Fig. 3, the apparatus 31 for removing NOx and/or SOx includes a reactive chamber 12 having four side walls and the top and bottom openings covered with nets 33. Air flows through the net-covered top and bottom openings. The bottom of the reactive chamber 12 is connected to the exhaust port of the electric dust collector 30 shown in Fig. 4, through a suction duct 34. The top of the reactive chamber 12 is opened into the space within the by-path tunnel 27, by way of an exhaust duct 35. An exhaust port 37 under control of an electromagnetic valve 36 is formed in the bottom of the suction duct 34.

The space in the reactive chamber 12 is horizontally segmented into three spaces one above another by nets 38. Further, it is vertically segmented into three spaces. Thus, the inner space of the chamber 12 is divided into a total of 27 small spaces 12a. Each of small spaces 12a is further divided into the upper and lower spaces by a horizontal net 40. The lower space of the small space 12a contains a number of globular bodies 41 bearing photocatalyzer on the surface thereof piled high up to about half of the height of the lower space. A light sources 14 emitting light of 300 to 400 nm in wavelength toward the globular bodies 41 is located at near to the middle of the upper space of the small space 12a. Nozzles 42 for spouting forth water toward the globular bodies 41 are provided above the light sources 14 in the upper space of the small space.

Each of globular bodies 41 of photocatalyzer is a hollowed ball of 20 to 50 mm in diameter, made of synthetic resin. The surface of each globular body is smeared with powder, of the order of sub-micron, of a mixture of titanium dioxide, active carbon and iron series metal oxide. Air still containing harmful gas of NOx and SOx, after the sooty matter is removed therefrom by the electric dust collector 30, is fed through the suction duct 34 into the harmful gas removal apparatus 31, as indicated by arrows. The air passes through the nets 33, 38, and 40 within the reactive chamber 12 from the bottom to the top, and is exhausted from the exhaust duct 35. When the air flows in the chamber, the globular bodies 41 float by air pressure.

The NOx and SOx contained in the air passing through the reactive chamber 12 is oxidized by the photocatalyzer reacting therewith which is activated by light from the light source, so that the products resulting from the oxidization are retained on the surfaces of the globular bodies 41. Since the globular bodies 41 are afloat, light from the light sources 14 uniformly illuminates the entire surfaces of the globular bodies 41, and the harmful gas also come uniformly in contact with the entire surfaces of the globular bodies 41.

When the activity of the photocatalyzer deteriorates, the reaction thereof is stopped. The surfaces of the globular bodies 41 are washed with water sprayed from the nozzles 42. The reaction products caught by the photocatalyzer are washed away from the globular body surfaces by water, so that the globular bodies 41 of photocatalyzer recovers its normal activity. The water after used for the washing falls to the suction duct 34 through the electromagnetic valve 36 opened, and is collected into a water disposal tank, not shown, from the exhaust port 37. In the tank, the waste water is neutralized and exhausted.

It is noted that the surfaces of the globular bodies 41 serve as the contact area of photocatalyzer, so that this contact area is larger than that of the planar surface of the wall of the reactive chamber. It is noted further that the surfaces of the globular bodies 41 being afloat and drifting are uniformly illuminated with light from the light sources 14 and come in contact with the harmful gas in a similar way. With these advantageous features, the reaction of them efficiently progresses.

Further, the globular bodies 41 may be taken out of the chamber. Accordingly, the globular bodies 41 may be washed outside the chamber, and when damaged, may be replaced with new ones in an easy manner.

The globular bodies 41 as hollowed balls may be balls made use of porous material, if floatable. The shape of the globular bodies 41 is not necessary perfect spherical.

As was described above, the photocatalyzer takes the form of grains of a mixture of photocatalyzer and active carbon or a number of globular bodies bearing photocatalyzer on the surfaces thereof. The grains or globular bodies of photocatalyzer are brought into contact with NOx and/or SOx in a state that these are floating or being drifting. The present invention thus constructed has the following advantages when comparing with the conventional harmful gas removal method or apparatus in which photocatalyzer is layered on the surface of a fixed member.
(1) The apparatus for removing NOx and/or SOx may be constructed with separate sections, a reaction section where the photocatalyzer reacts with harmful gas and a regaining section where the used photocatalyzer is washed and dried. Accordingly, the construction of each section is simple.
(2) The photocatalyzer is uniformly illuminated with light, and well contacts with NOx and/or SOx. The reaction efficiency of them is good.
(3) The surface areas of the grains of photocatalyzer and the globular bodies of photocatalyzer are large. The apparatus is small in size and a large contact area is realized.
(4) The regaining process may be continued while the reaction process progresses. The apparatus is efficiently operable.
(5) The deteriorated photocatalyzer can be removed and replaced with a new one in a simple way.

## Claims

1. A method of removing NOₓ and/or SOₓ from an air stream, comprising the steps of:
mixing a mixture (10) of photocatalyzer and active carbon with air containing NOₓ and/or SOₓ in a chamber (12), said mixture (10), being in the form of shaped grains, drifting in said air;
reacting said drifting mixture (10) with said air during illumination by lighting means (14) in said chamber (12), said mixture (10) catching NOₓ and/or SOₓ so as to remove said NOₓ and/or SOₓ;
discharging the air separated from said NOₓ and/or SOₓ from an outlet (18) of said chamber (12);
removing part of said illuminated mixture (10) from said drifting mixture (10);
regaining the reactivity of said mixture (10) without interrupting the reacting step; and
returning said mixture (10) into said chamber (12).

2. An apparatus for removing NOₓ and/or SOₓ from an air stream comprising:
a chamber (12) for mixing a mixture (10) of photocatalyzer and active carbon with air containing NOₓ and/or SOₓ, said mixture being in the form of shaped grains;
drifting means (11, 23, 25) for swirling said mixture in said chamber (12);
lighting means (14) disposed in said chamber (12) for illuminating said drifting mixture (10) to react with said air in said chamber (12);
outlet (18) for discharging the air separated from said mixture (10) from said chamber (12);
regaining means (13) separated from said chamber (12) for regaining the reactivity of said mixture (10); and
circulating means (11, 21, 22, 23, 25) for removing part of said mixture (10) from said chamber (12) and returning said mixture (10) from said regaining means (13) to said chamber (12).

3. The apparatus according to claim 2, wherein said mixture (10) of photocatalyzer and active carbon is granulated in a diameter of 1 µm to 1 mm.

4. The apparatus according to claim 3, wherein said regaining means (13) includes washing means sprinkling water to said grains (10) thus reacted and drying means drying said grains (10) thus washed.

5. The apparatus according to claim 3, wherein said circulating means (11, 21, 22) includes a transferring blower (11) for circulating said grains (10) by the flow of transferring air.

6. The apparatus according to claim 5, wherein on upper stream of said outlet (18), a gas/solid separating means (19) is provided for separating the discharged air from the flow of said grains (10).

7. The apparatus according to claim 3, wherein said circulating means (23, 25) includes a conveyer line (25) for transferring said grains (10) into said chamber (12), in said chamber (12) said grains (10) being free fallen in the flow of said air and said grains (10) staying at the downstream portion (24) of said chamber (12) which is a starting portion of said conveyer line (25).

8. The apparatus according to claim 2, wherein said mixture (10) of photocatalyzer and active carbon is supported on surfaces of a plurality of globular bodies having a diameter of 20 mm to 50 mm, said globular bodies being floatable in air.

9. An apparatus for removing NOₓ and/or SOₓ from an air stream, comprising:
a chamber (12) for mixing a mixture of photocatalyzer and active carbon with air containing NOₓ and/or SOₓ, wherein said mixture is supported on surfaces of a plurality of globular bodies (41) having a diameter of 20 mm to 50 mm, said globular bodies (41) being floatable in air, and wherein said chamber (12) has at least one layer of net (38) bearing said globular bodies (41) thereon;
drifting means (28) for swirling said mixture in said chamber (12);
lighting means (14) disposed in said chamber (12) for illuminating said drifting mixture to react with said air.

10. The apparatus according to claim 9 further comprising nozzles (42) for sprinkling forth washing water to said mixture disposed in the upper portion of said chamber (12).

11. The apparatus according to any of claims 2 to 10, in which said photocatalyzer is titanium dioxide or a mixture of titanium dioxide and iron series metal oxide.

## Patentansprüche

1. Ein Verfahren zum Abtrennen von NOₓ und/oder SOₓ aus einem Luftstrom, das die Schritte umfaßt:
Mischen einer Mischung (10) aus Photokatalysator und Aktivkohle mit Luft, die NOₓ und/oder SOₓ enthält, in einer Kammer (12), wobei die genannte Mischung (10) in der Form von geformten Körnchen ist, die in der genannten Luft treiben;
Reagieren der genannten treibenden Mischung (17) mit der genannten Luft während der Beleuchtung durch eine Beleuchtungseinrichtung (14) in der genannten Kammer (12), wobei die genannte Mischung (10) NOₓ und/oder SOₓ einfängt, um das genannte NOₓ und/oder SOₓ abzutrennen;
Ausbringen der von dem genannten NOₓ und/oder SOₓ getrennten Luft aus einem Auslaß (18) der genannten Kammer (12);
Abtrennen eines Teils der genannten beleuchteten Mischung (10) von der genannten treibenden Mischung (10);
Wiedergewinnen des Reaktionsvermögens der genannten Mischung (10) ohne Unterbrechung des Reaktionsschritts; und
Rückführen der genannten Mischung (10) in die genannte Kammer (12).

2. Eine Vorrichtung zum Abtrennen von NOₓ und/oder SOₓ aus einem Luftstrom, die umfaßt:
eine Kammer (12) zum Mischen einer Mischung (10) aus Photokatalysator und Aktivkohle mit Luft, die NOₓ und/oder SOₓ enthält, wobei die genannte Mischung in der Form von geformten Körnchen ist;
eine Treibschwebeeinrichtung (11, 23, 25) zum Verwirbeln der genannten Mischung in der genannten Kammer (12);
eine Beleuchtungseinrichtung (14), die in der genannten Kammer (12) zum Beleuchten der genannten treibenden Mischung (10) angeordnet ist, damit sie mit der genannten Luft in der genannten Kammer (12) reagiert;
einen Auslaß (18) zum Austragen der von der genannten Mischung (10) von der genannten Kammer (12) getrennten Luft;
eine Wiedergewinnungseinrichtung (13), die von der genannten Kammer (12) getrennt ist, um das Reaktionsvermögen der genannten Mischung (10) wiederzugewinnen; und
eine Umlaufeinrichtung (11, 21, 22, 23, 25), um einen Teil der genannten Mischung (10) aus der genannten Kammer (12) abzutrennen und die genannte Mischung (10) von der genannten Wiedergewinnungseinrichtung (13) der genannten Kammer (12) wieder zuzuführen.

3. Die Vorrichtung gemäß Anspruch 2, worin die genannte Mischung (10) aus Photokatalysator und Aktivkohle mit einem Durchmesser von 1 µm bis 1 mm geformt ist.

4. Die Vorrichtung gemäß Anspruch 3, worin die genannte Wiedergewinnungseinrichtung (13) eine Wascheinrichtung einschließt, die Wasser auf die genannten Körnchen (10), die derart reagiert haben, sprüht, und eine Trocknungseinrichtung, die die genannten Körnchen (10) trocknet, die derart gewaschen worden sind.

5. Die Vorrichtung gemäß Anspruch 3, worin die genannte Umlaufeinrichtung (11, 21, 22) ein Überführungsgebläse (11) zum Umlaufen der genannten Körnchen (10) durch die Strömung der Überführungsluft einschließt.

6. Die Vorrichtung gemäß Anspruch 5, worin bei einem oberen Strom des genannten Auslasses (18) eine Gas/Festkörper-Trennvorrichtung (19) vorgesehen ist, um die ausgebrachte Luft von der Strömung der genannten Körnchen (10) zu trennen.

7. Die Vorrichtung gemäß Anspruch 3, worin die genannte Umlaufeinrichtung (23, 25) eine Förderlinie (25) zum Überführen der genannten Körnchen (10) in die genannte Kammer (12) einschließt, die genannten Körnchen (10) in der genannten Kammer (12) frei in die Strömung der genannten Luft fallen und die genannten Körnchen (10) in dem stromabwärtigen Abschnitt (24) der genannten Kammer (12) bleiben, der ein Anfangsabschnitt der genannten Förderlinie (25) ist.

8. Die Vorrichtung gemäß Anspruch 2, worin die genannte Mischung (10) aus Photokatalysator und Aktivkohle auf Oberflächen einer Mehrzahl kugelförmiger Körper gehalten ist, die einen Durchmesser von 20 mm bis 50 mm haben, wobei die kugelförmigen Körper in Luft schwimmen können.

9. Eine Vorrichtung zum Abtrennen von NOₓ und/oder SOₓ aus einem Luftstrom, umfassend:
eine Kammer (12) zum Vermischen einer Mischung aus Photokatalysator und Aktivkohle mit Luft, die NOₓ und/oder SOₓ enthält, worin die genannte Mischung auf Oberflächen einer Mehrzahl von kugelförmigen Körpern (41) gehalten wird, die einen Durchmesser von 20 mm bis 50 mm haben, wobei die genannten kugelförmigen Körper (41) in Luft schwimmbar sind, und worin die genannte Kammer (22) wenigstens eine Netzschicht hat, die darauf die genannten kugelförmigen Körper (41) trägt;
eine Treibschwebeeinrichtung (28) zum Verwirbeln der genannten Mischung in der genannten Kammer (12);
eine Beleuchtungseinrichtung (14), die in der genannten Kammer (12) zum Beleuchten der genannten treibenden Mischung angeordnet ist, damit sie mit der genannten Luft reagiert.

10. Die Vorrichtung gemäß Anspruch 9, die des weiteren Düsen (42) zum Aussprühen von Waschwasser zu der genannten Mischung umfaßt, die in dem oberen Abschnitt der genannten Kammer (12) angeordnet ist.

11. Die Vorrichtung gemäß irgendeinem der Ansprüche 2 bis 10, in der der genannte Photokatalysator Titandioxid oder eine Mischung aus Titandioxid und Metalloxid der Eisenreihe ist.

## Revendications

1. Procédé pour éliminer NOₓ et/ou SOₓ d'un courant d'air, comprenant les étapes de :
mélange d'un mélange (10) d'un photocatalyseur et de charbon actif avec de l'air contenant NOₓ et/ou SOₓ dans une chambre (12), ledit mélange (10) étant sous forme de grains façonnés, tourbillonnant dans ledit air ;
réaction dudit mélange (10) flottant avec ledit air pendant l'illumination par des moyens d'illumination (14) dans ladite chambre (12), ledit mélange (10) capturant NOₓ et/ou SOₓ de façon à éliminer ledit NOₓ et/ou SOₓ ;
décharge de l'air séparé dudit NOₓ et/ou SOₓ par une sortie (18) de ladite chambre (12) ;
enlèvement d'une partie dudit mélange illuminé (10) dudit mélange flottant(10) ;
régénération de la réactivité dudit mélange (10) sans interrompre l'étape de réaction ; et
réintroduction dudit mélange (10) dans ladite chambre (12).

2. Dispositif pour éliminer NOₓ et/ou SOₓ d'un courant d'air comprenant :
une chambre (12) pour mélanger un mélange (10) d'un photocatalyseur et de charbon actif avec de l'air contenant NOₓ et/ou SOₓ, ledit mélange étant sous forme de grains façonnés ;
des moyens tourbillonnaires (11, 23, 25) pour faire tourner rapidement ledit mélange dans ladite chambre (12) ;
des moyens d'illumination (14) disposés dans ladite chambre (12) pour illuminer ledit mélange tourbillonnant (10) pour le faire réagir avec ledit air dans ladite chambre (12) ;
une sortie (18) pour décharger de ladite chambre (12) l'air séparé dudit mélange (10) ;
des moyens de régénération (13) séparés de ladite chambre (12) pour régénérer la réactivité dudit mélange (10) ; et
des moyens de circulation (11, 21, 22, 23, 25) pour enlever une partie dudit mélange (10) de ladite chambre (12) et pour renvoyer ledit mélange (10) depuis lesdits moyens de régénération (13) à ladite chambre (12).

3. Dispositif selon la revendication 2, caractérisé en ce que ledit mélange (10) de photocatalyseur et de charbon actif est sous forme de grains de diamètre de 1 µm à 1mm.

4. Dispositif selon la revendication 3, caractérisé en ce que lesdits moyens de régénération (13) comprennent des moyens de lavage aspergeant d'eau lesdits grains (10) ayant ainsi réagi et des moyens de séchage séchant lesdits grains (10) ainsi lavés.

5. Dispositif selon la revendication 3, caractérisé en ce que lesdits moyens de circulation (11, 21, 22) comprennent un souffleur (11) de transport pour faire circuler lesdits grains (10) par le flux d'air transporté.

6. Dispositif selon la revendication 5, caractérisé en ce que sur le courant supérieur de ladite sortie (18) se trouvent des moyens de séparation (19) gaz/solide pour séparer l'air déchargé du flux desdits grains (10).

7. Dispositif selon la revendication 3, caractérisé en ce que lesdits moyens de circulation ( 23, 25) comprennent une ligne de convoyage (25) pour transférer lesdits grains (10) dans ladite chambre (12), lesdits grains (10) dans ladite chambre (12) étant libres de tomber dans le flux dudit air et lesdits grains (10) descendant dans la partie aval (24) de ladite chambre (12) qui est une partie de départ de ladite ligne de convoyage (25).

8. Dispositif selon la revendication 2, caractérisé en ce que ledit mélange (10) de photocatalyseur et de charbon actif est supporté sur des surfaces d'une pluralité de particules globuleuses ayant un diamètre de 20 à 50 mm, lesdites particules globuleuses pouvant flotter dans l'air.

9. Dispositif pour éliminer NOₓ et/ou SOₓ d'un courant d'air comprenant :
une chambre (12) pour mélanger un mélange d'un photocatalyseur et de charbon actif avec de l'air contenant NOₓ et/ou SOₓ, caractérisé en ce que ledit mélange est supporté sur les surfaces d'une pluralité de particules globuleuses (41) ayant un diamètre de 20 mm à 50 mm, lesdites particules globuleuses (41) pouvant flotter dans l'air et en ce que ladite chambre (12) a au moins une couche de réseau (38) portant dessus lesdites particules globulaires (41) ;
des moyens tourbillonnaires (28) pour faire tourner rapidement ledit mélange dans ladite chambre (12) ;
des moyens d'illumination (14) disposés dans ladite chambre (12) pour illuminer ledit mélange tourbillonnant pour réagir avec ledit air.

10. Dispositif selon le revendication 9, caractérisé en ce qu'il comprend en outre des buses (42) pour asperger vers l'avant de l'eau de lavage audit mélange disposé dans la partie supérieure de ladite chambre (12).

11. Dispositif selon l'une des revendications 2 à 10, caractérisé en ce que ledit photocatalyseur est le dioxyde de titane ou un mélange de dioxyde de titane et d'un oxyde de métal de la famille du fer.
